# EUROPÄISCHE PATENTANMELDUNG

(11) **EP 2 873 703 A1**
(43) Veröffentlichungstag der Anmeldung: **20.05.2015**
(21) Anmeldenummer: 13193313.7
(22) Anmeldetag: 18.11.2013
(51) Int. Cl.: C09D 5/00, C09D 127/06, C09D 167/07, C09D 161/24, C09D 163/00, C09D 133/06, C09D 7/14, C09D 17/00

(54) **Mischsystem zur Herstellung sowohl von Decklackzusammensetzungen als auch von als Spachtel eingesetzten Beschichtungszusammensetzungen**

(71) Anmelder: BASF Coatings GmbH, 48165 Münster (DE)
(72) Erfinder: Blaser, Alexander, 59387 Ascheberg (DE); Lenz, Sebastian, 59368 Werne (DE); Breuer, Julia, 48249 Dülmen (DE); Bloemer, Gabriele, 41460 Neuss (DE)
(74) Vertreter: Leifert & Steffan

(57) **Zusammenfassung**

Die vorliegende Erfindung betrifft ein Mischsystem zur Herstellung von Decklackzusammensetzungen und Spachteln enthaltend wenigstens die folgenden Komponenten (a) bis (d), nämlich wenigstens eine pigmentfreie Basiszusammensetzung (a) zur Herstellung wenigstens einer Decklackzusammensetzung (A), wobei (a) wenigstens ein Bindemittel (a1) und wenigstens ein organisches Lösemittel (a2) umfasst, wenigstens eine von (a) verschiedene pigmentfreie Basiszusammensetzung (b) zur Herstellung wenigstens einer als Spachtel eingesetzten Beschichtungszusammensetzung (B), wobei (b) wenigstens ein Bindemittel (b1), wenigstens ein organisches Lösemittel (b2) sowie wenigstens einen Füllstoff (b3) umfasst, mehrere unterschiedliche Pigmentpasten (c), welche jeweils unabhängig voneinander wenigstens ein Bindemittel (c1), wenigstens ein organisches Lösemittel (c2) sowie wenigstens ein Pigment (c3) umfassen, und mehrere unterschiedliche bindemittelfreie Farbstofflösungen (d), welche jeweils unabhängig voneinander wenigstens ein organisches Lösemittel (d1) und wenigstens einen Farbstoff (d2) umfassen, eine Verwendung dieses Mischsystems zur Herstellung von Decklackzusammensetzungen und/oder Spachteln, ein Verfahren zur Herstellung von Decklackzusammensetzungen und/oder Spachteln unter Einsatz des Mischsystems sowie eine Verwendung der dadurch erhältlichen Decklackzusammensetzungen und/oder Spachtel zum Ausbessern von Fehlstellen auf oder in Holz.

## Beschreibung

Die vorliegende Erfindung betrifft ein Mischsystem zur Herstellung von Decklackzusammensetzungen und Spachteln enthaltend wenigstens die folgenden Komponenten (a) bis (d), nämlich wenigstens eine pigmentfreie Basiszusammensetzung (a) zur Herstellung wenigstens einer Decklackzusammensetzung (A), wobei (a) wenigstens ein Bindemittel (a1) und wenigstens ein organisches Lösemittel (a2) umfasst, wenigstens eine von (a) verschiedene Basiszusammensetzung (b) zur Herstellung wenigstens einer als Spachtel eingesetzten Beschichtungszusammensetzung (B), wobei (b) wenigstens ein Bindemittel (b1), wenigstens ein organisches Lösemittel (b2) sowie wenigstens einen Füllstoff (b3) umfasst, mehrere unterschiedliche Pigmentpasten (c), welche jeweils unabhängig voneinander wenigstens ein Bindemittel (c1), wenigstens ein organisches Lösemittel (c2) sowie wenigstens ein Pigment (c3) umfassen, und mehrere unterschiedliche bindemittelfreie Farbstofflösungen (d), welche jeweils unabhängig voneinander wenigstens ein organisches Lösemittel (d1) und wenigstens einen Farbstoff (d2) umfassen, eine Verwendung dieses Mischsystems zur Herstellung von Decklackzusammensetzungen und/oder Spachteln, ein Verfahren zur Herstellung von Decklackzusammensetzungen und/oder Spachteln unter Einsatz des Mischsystems sowie eine Verwendung der dadurch erhältlichen Decklackzusammensetzungen und/oder Spachtel zum Ausbessern von Fehlstellen auf oder in Holz.

Übliche Verfahren zur Ausbesserung von Schadstellen an einer gegebenenfalls mehrschichtigen Lackierung von metallischen Bauteilen, insbesondere in der Autoreparaturlackierung, beinhalten die Schritte einer sorgfältigen Reinigung, eines Schleifens sowie eines Spachtelns und/oder Füllerns an der Schadstelle. Danach wird die Schadstelle gegebenenfalls nach einer weiteren Vorbehandlung üblicherweise deckend und auslaufend in die angrenzenden Bereiche hinein mit geeigneten Überzugslacken behandelt wie zum Beispiel mit geeigneten Basislacken. Nach Antrocknen des so hergestellten Überzugs werden der Überzug und die angrenzenden Teile üblicherweise mit einem Klarlack überspritzt und dann gemeinsam mit den zuvor aufgebrachten Schichten getrocknet.

Das Verfahren zur Ausbesserung von Schadstellen, die sich auf oder in gegebenenfalls beschichteten Holzoberflächen befinden, unterscheidet sich oftmals insofern von dem vorstehend beschriebenen Verfahren zur Ausbesserung von Schadstellen an einer gegebenenfalls mehrschichtigen Lackierung von metallischen Bauteilen als die betreffende Schadstelle sofern erforderlich zunächst gespachtelt und die so behandelte Schadstelle im Anschluss direkt mit wenigstens einer als Retuschierfarbe eingesetzten Decklackzusammensetzung überzogen wird. Beispielsweise erfolgt auf diese Weise eine Ausbesserung von Schadstellen, die sich auf Holzstücken, Holzgegenständen oder auf Holzbauteilen befinden, welche zur Herstellung von Armaturenbrettern im Automobilbereich dienen. Zur Abdeckung von sichtbaren Bauteilkanten ist zudem eine Abdeckung mit einer Kantenfarbe erforderlich. Auch hierzu wird üblicherweise eine Decklackzusammensetzung eingesetzt. Beispielsweise wird eine solche Kantenfarbe zur Abdeckung von Fräskanten oder Stoßkanten eingesetzt.

Bei einer solchen Ausbesserung von Schadstellen ist es wichtig, dass die zur Ausbesserung eingesetzten Spachtel bzw. Decklackzusammensetzungen die gleichen oder zumindest annährend gleichen Farbtöne aufweisen wie die gegebenenfalls beschichtete auszubessernde Holzoberfläche per se, damit nach der Reparatur nicht erkennbar ist, dass eine Ausbesserung überhaupt stattgefunden hat.

Die entsprechenden als Spachtel oder als Decklackzusammensetzungen eingesetzten Beschichtungszusammensetzungen können dabei direkt bereits vom Lackhersteller im gewünschten Farbton geliefert werden. Nachteilig daran ist jedoch, dass davon oftmals jeweils nur geringe Mengen für die Ausbesserung erforderlich sind, die fertigen Spachtel oder Decklackzusammensetzungen jedoch oftmals zumindest nicht über einen langen Zeitraum wie beispielsweise einem Zeitraum von mehr als 12 Monaten lagerstabil sind. Aus ökonomischen Gründen ist eine solche Vorgehensweise daher nachteilig.

Eine weitere Möglichkeit ist es, basierend auf einer Grundmischung durch Zugabe verschiedener Tönungskorrekturen seitens des Herstellers die Spachtel bzw. Decklackzusammensetzungen zumindest annähernd in den zur Ausbesserung erforderlichen Farbtönen herzustellen und diese an den Kunden zu liefern. Vor Ort wird diesen Mischungen dann vor der Ausbesserung eine dritte Mischung hinzugefügt, um eine resultierende Mischung mit dem für jedes individuelle auszubessernde Holz jeweiligen zumindest annährend exakten gewünschten Farbton zu generieren, der für die jeweilige Reparaturlackierung erforderlich ist. Nachteilig daran ist jedoch, dass die Komponenten der dritten Mischung oftmals nicht mit den Komponenten der Grundmischung und/oder der Tönungskorrektur abgestimmt sind, beispielsweise hinsichtlich der darin jeweils enthaltenen Bindemittel-Komponenten, so dass es beispielsweise zu Problemen hinsichtlich Phasenseparation, Farbstabilitäten und/oder Metamerie-Effekten kommen kann. Auch ist oftmals nur eine geringe Reproduzierbarkeit der jeweils resultierenden Mischung möglich.

Mischsysteme zur Herstellung von wässrigen Basislackzusammensetzungen sind beispielsweise bekannt aus WO 92/17554 A1 und WO 01/18129 A1. Diese Mischsysteme ermöglichen die Herstellung von Zusammensetzungen mit genau festgelegter Farbtönung aus verschiedenen Basisfarben. Diese Herstellung aus einem Mischsystem hat grundsätzlich den Vorteil, dass nicht jeder Farbton einzeln hergestellt und gelagert werden muss, wodurch Produktions-, Distributions- und Lagerhaltungskosten gesenkt werden können.

Die in WO 92/17554 A1 und WO 01/18129 A1 beschriebenen Mischsysteme eignen sich jedoch nur für die Herstellung von wässrigen Basislackzusammensetzungen, die in der Reparaturlackierung von metallischen Bauteilen in der Automobilindustrie eingesetzt werden. Zum Ausbessern von Holz oder Holzgegenständen ist wie vorstehend ausgeführt neben wenigstens einer Decklackzusammensetzung zudem ein Spachtel erforderlich. Derartige Zusammensetzungen sind üblicherweise Lösemittel-basiert. Solche Spachtel zeichnen sich zudem üblicherweise aufgrund der darin enthaltenen Füllstoffe durch eine insbesondere gegenüber einer Decklackzusammensetzung vergleichsweise hohe Viskosität aus.

Da der Einsatz solcher Spachtel für die Ausbesserung von Fehlstellen auf oder in Holz jedoch unabdingbar ist, besteht daher ein Bedarf an einem Mischsystem, mittels dessen sowohl Decklackzusammensetzungen als auch als Spachtel eingesetzte Beschichtungszusammensetzungen mit jeweils einer hohen Farbtongenauigkeit hergestellt werden können, die sich zur Reparaturlackierung von Holz oder Holzgegenständen eignen, durch welches die vorstehend genannten Nachteile vermieden werden können.

Eine Aufgabe der vorliegenden Erfindung ist es daher, ein Mischsystem zur Verfügung zu stellen, mittels dessen sowohl Decklackzusammensetzungen als auch als Spachtel eingesetzte Beschichtungszusammensetzungen mit jeweils einer hohen Farbtongenauigkeit hergestellt werden können, die sich zur Reparaturlackierung von Holz oder Holzgegenständen eignen, um so die gewünschten Farbtöne möglichst exakt und reproduzierbar vor Ort direkt vor ihrer Applikation einstellen zu können.

Diese Aufgabe wird gelöst durch die in den Patentansprüchen beanspruchten Gegenstände sowie den in der nachfolgenden Beschreibung beschriebenen bevorzugten Ausführungsformen dieser Gegenstände.

Ein erster Gegenstand der vorliegenden Erfindung ist daher ein Mischsystem zur Herstellung von Decklackzusammensetzungen und Spachteln enthaltend wenigstens die folgenden Komponenten (a) bis (d) sowie gegebenenfalls (e), nämlich
(a) wenigstens eine pigmentfreie Basiszusammensetzung zur Herstellung wenigstens einer Decklackzusammensetzung (A), wobei (a)
   wenigstens ein Bindemittel (a1) und wenigstens ein organisches Lösemittel (a2) sowie gegebenenfalls wenigstens ein Mattierungsmittel (a3) umfasst,
(b) wenigstens eine von (a) verschiedene vorzugsweise pigmentfreie Basiszusammensetzung zur Herstellung wenigstens einer als Spachtel eingesetzten Beschichtungszusammensetzung (B), wobei (b)
   wenigstens ein Bindemittel (b1), wenigstens ein organisches Lösemittel (b2) sowie wenigstens einen Füllstoff (b3) umfasst,
(c) mehrere unterschiedliche Pigmentpasten, welche jeweils unabhängig voneinander
   wenigstens ein Bindemittel (c1), wenigstens ein organisches Lösemittel (c2) sowie wenigstens ein Pigment (c3) umfassen,
(d) mehrere unterschiedliche bindemittelfreie Farbstofflösungen, welche jeweils unabhängig voneinander
   wenigstens ein organisches Lösemittel (d1) und wenigstens einen Farbstoff (d2) umfassen, und
(e) gegebenenfalls ein oder mehrere unterschiedliche organische Lösemittel, die gegebenenfalls wenigstens ein Additiv und/oder wenigstens ein Vernetzungsmittel enthalten können.

Gegebenenfalls ist das erfindungsgemäße Mischsystem zudem geeignet zur Herstellung von farbigen Klarlackzusammensetzungen, beispielsweise durch Mischen wenigstens einer Komponente (a) mit wenigstens einer Komponente (d).

Es wurde überraschend gefunden, dass es das erfindungsgemäße Mischsystem ermöglicht, dass sowohl Decklackzusammensetzungen, insbesondere als Retuschierfarbe und/oder Kantenfarbe eingesetzte Decklackzusammensetzungen, als auch als Spachtel eingesetzte Beschichtungszusammensetzungen mittels nur einer Pastentechnologie aus einer in dem Mischsystem enthaltenen begrenzten Anzahl von Basis-Komponenten jeweils mit einer hohen Farbtongenauigkeit auch in jeweils nur geringen Mengen hergestellt werden können, die sich insbesondere zur Reparaturlackierung von Holz oder Holzgegenständen eignen. Das erfindungsgemäße Mischsystem ermöglicht dabei eine exakte und reproduzierbare Einstellung der jeweiligen gewünschten Farbtöne unmittelbar vor ihrer Applikation.

Insbesondere wurde überraschend gefunden, dass mittels des erfindungsgemäßen Mischsystem nicht nur die erforderlichen Decklackzusammensetzungen, insbesondere als Retuschierfarbe und/oder Kantenfarbe eingesetzte Decklackzusammensetzungen, sondern auch der benötigte Spachtel aus einer einzigen Linie, d.h. aus nur einer Pastenreihe, erhalten werden können, der sich üblicherweise beispielsweise hinsichtlich seines Festkörperanteils und/oder seiner Viskosität von den Decklackzusammensetzungen unterscheidet.

Das erfindungsgemäße Mischsystem ermöglicht es ferner, dass nur eine geringe Menge an unterschiedlichen Basis-Komponenten vor Ort gelagert werden muss (Platzersparnis). Die Zusammensetzung der jeweiligen Basis-Komponenten muss zudem für den Einsatz in dem Mischsystem nicht geändert werden. Zudem ist eine flexiblere Anpassung an das jeweilige zu behandelnde Holz möglich. Zudem weist das erfindungsgemäße Mischsystem aus ökonomischen Gründen Vorteile auf, da die Basis-Materialien per se üblicherweise eine höhere Lagerstabilität aufweisen als die daraus hergestellten Decklackzusammensetzungen bzw. Spachtel.

Das erfindungsgemäße Mischsystem ermöglicht zudem eine einfache und kostengünstige Endherstellung von qualitativ hochwertigen, gebrauchsfertigen Decklackzusammensetzungen und Spachteln in einer großen Anzahl von exakt nachstellbaren Farbtönen mit hoher Qualität durch den Anwender unmittelbar am Anwendungsort und ist für die Verwendung im "Do-It-Yourself"-Bereich geeignet.

Das erfindungsgemäße Mischsystem eignet sich zur Herstellung von Decklackzusammensetzungen und Spachteln sowie von Klarlackzusammensetzungen.

Der Begriff "umfassend" bzw. "enthaltend" im Sinne der vorliegenden Erfindung, beispielsweise in Zusammenhang mit jeder der Komponenten (a), (b), (c), (d) bzw. (A), (A1), (A2) und (B), hat in einer bevorzugten Ausführungsform die Bedeutung "bestehend aus". Dabei können hinsichtlich jeder der vorstehend genannten Produkte in dieser bevorzugten Ausführungsform eine oder mehrere der weiteren nachstehend genannten optional enthaltenen Bestandteile jeweils unabhängig voneinander darin enthalten sein wie. Alle Bestandteile können dabei jeweils in ihren vorstehend und nachstehend genannten bevorzugten Ausführungsformen enthalten sein.

Die synonymen Begriff "Spachtel" und "Spachtelmasse" sind dem Fachmann bekannt, beispielsweise aus der DIN 55945 (Datum: Oktober 2001). Unter "Spachtel" bzw. "Spachtelmasse" wird im Sinne der vorliegenden Erfindung vorzugsweise eine vorzugsweise pigmentierte Beschichtungszusammensetzung verstanden, die sich durch einen hohen Gehalt an Füllstoffen, bezogen auf das Gesamtgewicht der Beschichtungszusammensetzung, auszeichnet. Diese Beschichtungszusammensetzung ist vorzugsweise pastös und/oder zähflüssig. Die als Spachtel eingesetzte Beschichtungszusammensetzung wird auf einer geeigneten Substratoberfläche, insbesondere auf einer Holzoberfläche, zwecks Ausgleichs von Untergrundebenheiten eingesetzt, die zu großflächig für eine Korrektur beispielsweise durch Aufbringen einer Füllerschicht sind. Ein Spachtel im Sinne der vorliegenden Erfindung ist vorzugsweise ziehbar, streichbar und/oder spritzbar. Der Begriff "Spachtel" bzw. "Spachtelmasse" umfasst vorzugsweise Feinspachtel, Füll- und Ziehspachtel und Kunstharzspachtel. Auch diese Begriffe sind dem Fachmann bekannt und beispielsweise definiert im Römpp Lexikon, Lacke und Druckfarben, Georg Thieme Verlag 1998.

Bei den mittels des erfindungsgemäßen Mischsystems herstellbaren Decklackzusammensetzungen handelt es sich insbesondere um als Retuschierfarbe und/oder als Kantenfarbe einsetzbare Decklackzusammensetzungen. Diese Begriffe sind dem Fachmann bekannt. Unter "Retuschierfarbe" wird im Sinne der vorliegenden Erfindung vorzugsweise eine pigment- und bindemittelhaltige vorzugsweise transluzente Decklackzusammensetzung verstanden, die zur Ausbesserung von Fehlstellen auf oder in Holz eingesetzt wird. Unter "Kantenfarbe" wird im Sinne der vorliegenden Erfindung vorzugsweise eine pigment- und bindemittelhaltige Decklackzusammensetzung verstanden, die vorzugsweise zudem wenigstens ein Mattierungsmittel enthält, welche zur Abdeckung von sichtbaren Kanten, insbesondere Fräskanten und/oder Stoßkanten eingesetzt wird. Kantenfarben können gegebenenfalls auch als Retuschierfarben eingesetzt werden. Retuschierfarben enthalten vorzugsweise kein Mattierungsmittel.

Mittels des erfindungsgemäßen Mischsystems und/oder mittels des nachstehenden erfindungsgemäßen Verfahrens hergestellte und als Retuschierfarbe und/oder als Kantenfarbe einsetzbare Decklackzusammensetzungen weisen üblicherweise einen Festkörper-Anteil im Bereich von 5 bis 45 Gew.-%, besonders bevorzugt im Bereich von 7,5 bis 35 Gew.-%, ganz besonders bevorzugt von 10 bis 30 Gew.-%, noch bevorzugter im Bereich von 12,5 bis 25 Gew.-% oder im Bereich von 15 bis 30 Gew.-% oder im Bereich von 15 bis 25 Gew-%, jeweils bezogen auf das Gesamtgewicht der Decklackzusammensetzung (A) auf. Bestimmungsmethoden zur Bestimmung des Festkörper-Anteils sind dem Fachmann bekannt. Vorzugsweise wird der Festkörper-Anteil gemäß DIN EN ISO 3251 (Datum: 1.6.2008) bestimmt, insbesondere über eine Dauer von 120 Minuten bei 80°C.

Mittels des erfindungsgemäßen Mischsystems und/oder mittels des nachstehenden erfindungsgemäßen Verfahrens hergestellte als Spachtel eingesetzte Beschichtungszusammensetzungen weisen üblicherweise einen Festkörper-Anteil im Bereich von 15 bis 85 Gew.-%, besonders bevorzugt im Bereich von 20 bis 80 Gew.-%, ganz besonders bevorzugt von 25 bis 75 Gew.-%, noch bevorzugter im Bereich von 30 bis 70 Gew.-% oder im Bereich von 35 bis 65 Gew.-% oder im Bereich von 40 bis 60 Gew-%, jeweils bezogen auf das Gesamtgewicht der Beschichtungszusammensetzung (B) auf. Bestimmungsmethoden zur Bestimmung des Festkörper-Anteils sind dem Fachmann bekannt. Vorzugsweise wird der Festkörper-Anteil gemäß DIN EN ISO 3251 (Datum: 1.6.2008) bestimmt, insbesondere über eine Dauer von 120 Minuten bei 80°C.

Das erfindungsgemäße Mischsystem enthält wenigstens vier Komponenten (a), (b), (c) und (d) sowie gegebenenfalls (e). Bei jeder der Komponenten (a), (b) und (c) sowie bei der Decklackzusammensetzung (A) und der Beschichtungszusammensetzung (B) handelt es sich jeweils unabhängig voneinander vorzugsweise um eine Dispersion basierend auf wenigstens einem organischen Lösemittel.

Vorzugsweise sind die im erfindungsgemäßen Mischsystem enthaltenen Komponenten (a), (b), (c), (d) und die gegebenenfalls vorhandene Komponente (e) jeweils unabhängig voneinander nicht-wässrige Komponenten. Analoges gilt dementsprechend auch für die mittels des erfindungsgemäßen Mischsystems und/oder mittels des nachstehenden erfindungsgemäßen Verfahrens hergestellten als Spachtel einsetzbaren Beschichtungszusammensetzungen und die als Retuschierfarbe und/oder als Kantenfarbe einsetzbaren Decklackzusammensetzungen.

Unter dem Begriff "nicht-wässrig" im Zusammenhang mit den in der erfindungsgemäßen Mischsystem enthaltenen Komponenten bzw. den erhältlichen Spachteln und Decklackzusammensetzungen werden vorzugsweise solche flüssigen Produkte verstanden, die - als flüssiges Verdünnungsmittel, d.h. als flüssiges Lösemittel und/oder Dispergiermittel - organische Lösemittel als Hauptkomponente enthalten. Gegebenenfalls können Produkte jedoch Waser in geringen Anteilen enthalten. Vorzugsweise beträgt der Anteil an Wasser in den jeweiligen Produkten höchstens 10,0 Gew.-%, besonders bevorzugt höchstens 9,0 Gew.-%, ganz besonders bevorzugt höchstens 8,0 Gew.-%, insbesondere höchstens 5,0 Gew.-% oder höchstens 4,0 Gew.-% oder höchstens 3,0 Gew.-%, noch bevorzugter höchstens 2,5 Gew.-% oder höchstens 2,0 Gew.-% oder höchstens 1,5 Gew.-%, am meisten bevorzugt höchstens 1,0 Gew.-% oder höchstens 0,5 Gew.-% oder höchstens 0,1 Gew.-%, jeweils bezogen auf den Gesamtanteil der in Produkten enthaltenen flüssigen Verdünnungsmitteln, d.h. flüssigen Lösemitteln und/oder Dispergiermitteln. Insbesondere enthalten die jeweiligen Produkte keine Anteile von Wasser.

Die Anteile in Gew.-% aller in den erfindungsgemäß eingesetzten Komponenten (a) bis (d) und gegebenenfalls (e) wiederum enthaltenen Komponenten - wie beispielsweise von (a1) und (a2) im Fall der Komponente (a) - sowie die Anteile in Gew.-% aller Komponenten (b) bis (d) und gegebenenfalls (e) in den als Spachtel einsetzbaren Beschichtungszusammensetzungen (B) bzw. aller Komponenten (a), (c), (d) und gegebenenfalls (e) in den Decklackzusammensetzungen (A) addieren sich vorzugsweise jeweils auf 100 Gew.-%, bezogen auf das jeweilige Gesamtgewicht.

### Bindemittel und Lösemittel

Unter dem Begriff "Bindemittel" werden im Sinne der vorliegenden Erfindung in Einklang mit der DIN EN ISO 4618 (deutsche Fassung, Datum: März 2007) vorzugsweise die für die Filmbildung verantwortlichen nicht-flüchtigen Anteile einer Beschichtungszusammensetzung, d.h. wie beispielsweise der Komponenten (a), (b) und (c) sowie der Zusammensetzungen (A) und (B) verstanden. Darin enthaltene Pigmente und/oder Füllstoffe werden somit nicht unter den Begriff des Bindemittels subsumiert. Der nicht-flüchtige Anteil kann gemäß DIN EN ISO 3251 (Datum: 1.6.2008) bestimmt werden. Insbesondere werden unter dem Begriff "Bindemittel" die für die Filmbildung verantwortlichen in den jeweiligen Beschichtungsstoffen enthaltenen insbesondere polymeren Harze verstanden. Vom Begriff des "Bindemittels" sind vorzugsweise auch gegebenenfalls in dem jeweiligen Beschichtungsstoff vorhandene Vernetzungsmittel umfasst. Das gegbenenfalls vorhandene Vernetzungsmittel kann dabei jeweils in der Komponente (a), (b), (c) und/oder (d) und/oder (e) vorhanden sein. Vorzugsweise ist es in der Komponente (e) vorhanden.

Alle üblichen dem Fachmann bekannten Bindemittel eignen sich dabei als Bindemittel-Komponente (a1) der erfindungsgemäß eingesetzten Komponente (a) bzw. als Bindemittel-Komponente (b1) der erfindungsgemäß eingesetzten Komponente (b) bzw. als Bindemittel-Komponente (c1) der erfindungsgemäß eingesetzten Komponente (c).

Vorzugsweise umfasst jedes der Bindemittel (a1), (b1) und (c1) wenigstens ein polymeres Harz, welches gegebenenfalls reaktive funktionelle Gruppen aufweist, die eine Vernetzungsreaktion ermöglichen. Das jeweilige Bindemittel ist dabei ein selbstvernetzendes oder ein fremd-vernetzendes Bindemittel, vorzugsweise ein selbstvernetzendes Bindemittel. Um eine Vernetzungsreaktion zu ermöglichen, kann das Bindemittel (a1), (b1) oder (c1) der jeweiligen Komponente (a), (b) oder (c) daher neben dem wenigstens einen polymeren Harz jeweils unabhängig voneinander gegebenenfalls wenigstens ein Vernetzungsmittel enthalten.

Das in dem jeweiligen Bindemittel (a1), (b1) oder (c1) der jeweiligen Komponente (a), (b) oder (c) enthaltene polymere Harz bzw. das jeweils gegebenenfalls zudem enthaltene Vernetzungsmittel ist vorzugsweise thermisch vernetzbar, beispielsweise durch physikalische Trocknung, vorzugsweise beim Erwärmen auf Ofentemperaturen bei oder oberhalb von 18-23°C vernetzbar.

Jede übliche dem Fachmann bekannte vernetzbare reaktive funktionelle Gruppe kommt dabei in Betracht. Vorzugsweise weist jedes der polymeren Harze der Bindemittel (a1), (b1) oder (c1) der jeweiligen Komponente (a), (b) oder (c) wenigstens eine Art von funktionellen reaktiven Gruppen ausgewählt aus der Gruppe bestehend aus primären Amino-Gruppen, sekundären Amino-Gruppen, Hydroxyl-Gruppen, Thiol-Gruppen, Carboxyl-Gruppen, Gruppen, welche wenigstens eine C=C-Doppelbindung, wie beispielsweise Vinyl-Gruppen oder (Meth)acrylat-Gruppen, und Epoxid-Gruppen sowie Mischungen davon, auf. Bevorzugt sind Hydroxyl-Gruppen, Carboxyl-Gruppen und/oder Epoxid-Gruppen, insbesondere Hydroxyl-Gruppen.

Grundsätzlich eignen sich alle üblichen dem Fachmann bekannten geeigneten gegebenenfalls reaktive funktionelle Gruppen aufweisenden polymeren Harze als innerhalb des Bindemittels (a1), (b1) bzw. (c1) einsetzbare polymere Harz-Komponente, insbesondere solche polymeren Harze, die gemeinsam mit (a2) bzw. (b2) bzw. (c2) als Lösung oder Dispersion vorliegen. Als polymere Harze des Bindemittels (a1), (b1) und (c1) können jeweils unabhängig voneinander polymere Harze ausgewählt aus der Gruppe bestehend aus Polyurethanen, Polyharnstoffen, gesättigten Polyestern, ungesättigten Polyestern, Polyamiden, Poly(meth)acrylaten, (Meth)acryl-Copolymeren, Polyvinylchloriden, Vinylchlorid-Copolymerisaten, Polystyrolen, Styrolcopolymerisate, Olefin-Homo- und Copolymeren, Epoxidharzen sowie Mischungen davon.

Alle dem Fachmann bekannten üblichen Vernetzungsmittel können eingesetzt werden wie beispielsweise Phenoplaste, polyfunktionelle Mannich-Basen, Melaminharze, Benzoguanamin-Harze, Epoxide, freie Polyisocyanate und/oder blockierte Polyisocyanate, insbesondere blockierte Polyisocyanate. Ein besonders bevorzugtes Vernetzungsmittel ist ein blockiertes Polyisocyanat. Als blockierte Polyisocyanate können beliebige Polyisocyanate wie beispielsweise Diisocyanate benutzt werden, bei denen die Isocyanat-Gruppen mit einer Verbindung umgesetzt worden sind, so dass das gebildete blockierte Polyisocyanat insbesondere gegenüber Hydroxyl- und Amino-Gruppen wie primärer und/oder sekundärer Amino-Gruppen bei Raumtemperatur, d.h. bei einer Temperatur von 18 bis 23°C beständig ist, bei erhöhten Temperaturen, beispielsweise bei ≥ 40°C oder 60°C oder 80°C, bevorzugter ≥ 110°C, besonders bevorzugt ≥ 130°C und ganz besonders bevorzugt ≥ 140°C oder bei 90°C bis 300°C oder bei 100 bis 250°C, noch bevorzugter bei 125 bis 250°C und besonders bevorzugt bei 150 bis 250°, aber reagiert.

Vorzugsweise liegt das relative Gewichtsverhältnis des wenigstens einen polymeren Harzes des jeweiligen Bindemittels (a1), (b1) oder (c1) und des jeweils gegebenenfalls vorhandenen wenigstens einen Vernetzungsmittels in der jeweiligen Komponente (a), (b) oder (c) zueinander in einem Bereich von 4:1 bis 1,1:1, besonders bevorzugt in einem Bereich von 3:1 bis 1,1:1, ganz besonders bevorzugt in einem Bereich von 2,5:1 bis 1,1:1, insbesondere in einem Bereich von 2,1:1 bis 1,1:1, jeweils bezogen auf den Festkörper-Anteil des wenigstens einen polymeren Harzes und des wenigstens einen Vernetzungsmittels in der jeweiligen Komponente (a), (b) oder (c).

Alle üblichen dem Fachmann bekannten organischen Lösemittel eignen sich als Lösemittel-Komponente (a2) der erfindungsgemäß eingesetzten Komponente (a) bzw. als Lösemittel-Komponente (c2) der erfindungsgemäß eingesetzten Komponente (c) bzw. als Lösemittel-Komponente (d1) der erfindungsgemäß eingesetzten Komponente (d) bzw. Lösemittel-Komponente der optional erfindungsgemäß eingesetzten Komponente (e).

Vorzugsweise ist jedes der organischen Lösemittel (a2), (c2), (d1) und (e) jeweils unabhängig voneinander ausgewählt aus der Gruppe bestehend aus ein- oder mehrwertigen Alkohole, beispielsweise Methanol, Ethanol, 1-Propanol, 2-Propanol, 1-Butanol, Ethylenglykol, Ethylglykol, Propylglykol, Butylglykol, Butyldiglykol, 1,2-Propandiol und/oder 1,3-Propandiol, Ether, beispielsweise Diethylenglykoldimethylether, aliphatische Kohlenwasserstoffe, aromatische Kohlenwasserstoffe, beispielsweise Toluol und/oder Xylole, Ketone, beispielsweise Aceton, N-Methylpyrrolidon, N-Ethylpyrrolidon, Methylisobutylketon, Isophoron, Cyclohexanon, Methylethylketon, Ester, beispielsweise Methoxypropylacetat, Ethylacetat und/oder Butylacetat, Amide, beispielsweise Dimethylformamid und Mischungen davon.

Jeder der Komponenten (a), (b), (c), (d) und gegebenenfalls (e), insbesondere (d) und/oder (e), kann jeweils unabhängig voneinander wenigstens ein weiteres Additiv aufweisen. Vorzugsweise ist dieses wenigstens eine Additiv ausgewählt aus der Gruppe bestehend aus Antioxidantien, Antistatika, Netz- und Dispergiermitteln, Antiabsetzmitteln, Emulgatoren, Verlaufshilfsmitteln, Löslichkeitsvermittlern, Entschäumungsmitteln, Benetzungsmitteln, Stabilisierungsmitteln, vorzugsweise Hitze- und/oder Wäreme-Stabilisatoren, Prozess-Stabilisatoren und UV- und/oder Licht-Stabilisatoren, Lichtschutzmitteln, Entlüftern, Inhibitoren, Katalysatoren, Wachsen, Flexibilisierungsmitteln, Flammschutzmitteln, Hydrophobierungsmitteln, Hydrophilierungsmitteln, Thixotropiermitteln, Schlagzähmachern, Blähmitteln, Prozesshilfsmitteln, Weichmachern, und Gemischen aus den vorstehend genannten Additiven. Der Additiv-Gehalt an Additiv in der jeweiligen Komponente kann je nach Verwendungszweck sehr breit variieren. Vorzugsweise liegt der Gehalt, bezogen auf das Gesamtgewicht der jeweiligen Komponente bei 0,01 bis 20,0 Gew.-%, noch bevorzugter bei 0,05 bis 18,0 Gew.-%, besonders bevorzugt bei 0,1 bis 16,0 Gew.-%, ganz besonders bevorzugt bei 0,1 bis 14,0 Gew.-%, insbesondere bei 0,1 bis 12,0 Gew.-% und am meisten bevorzugt bei 0,1 bis 10,0 Gew.-%.

### Komponente (a)

Das erfindungsgemäße Mischsystem enthält wenigstens eine Komponente (a).

Komponente (a) des erfindungsgemäßen Mischsystems ist eine pigmentfreie Basiszusammensetzung zur Herstellung wenigstens einer Decklackzusammensetzung (A), wobei (a) wenigstens ein Bindemittel (a1) und wenigstens ein organisches Lösemittel (a2) umfasst. Gegebenenfalls kann die Komponente (a) zudem wenigstens ein Mattierungsmittel (a3) umfassen.

Vorzugsweise ist die wenigstens eine Komponente (a) transparent. Vorzugsweise ist die wenigstens eine Komponente (a) farbneutral, d.h. farblos.

Vorzugsweise enthält das erfindungsgemäße Mischsystem wenigstens zwei voneinander verschiedene Komponenten (a) (nämlich (a-I) und (a-II)), nämlich wenigstens eine Komponente
(a-I) zur Herstellung wenigstens einer Decklackzusammensetzung (A1),
   wobei (a-I) wenigstens ein Bindemittel (a1) und wenigstens ein organisches Lösemittel (a2) umfasst,
   und wenigstens eine Komponente
(a-II) zur Herstellung wenigstens einer von (A1) verschiedenen Decklackzusammensetzung (A2),
   wobei (a-II) wenigstens ein Bindemittel (a1), wenigstens ein organisches Lösemittel (a2) umfasst und wenigstens ein Mattierungsmittel (a3) umfasst.

Vorzugsweise ist die Komponente (a-I) transparent und gegebenenfalls glänzend. Vorzugsweise enthält (a-I) kein Mattierungsmittel. Die wenigstens aus der Komponente (a-I) erhältliche Decklackzusammensetzung (A1) wird vorzugsweise als Retuschierfarbe insbesondere zum Ausbessern von Fehlstellen auf oder in Holz eingesetzt, vorzugsweise nach Spachteln der Fehlstellen mit einer als Spachtel eingesetzten Beschichtungszusammensetzung wie der Beschichtungszusammensetzung (B). Vorzugsweise ist die Komponente (a-II) transparent und aufgrund der Gegenwart des Mattierungsmittels (a3) matt bzw. weist einen beispielsweise im Vergleich zu Komponente (a-I) verringerten Glanz auf. Die wenigstens aus der Komponente (a-II) erhältliche Decklackzusammensetzung (A2) wird vorzugsweise als Kantenfarbe insbesondere zum Ausbessern von Fehlstellen auf oder in Holz eingesetzt, vorzugsweise nach Spachteln der Fehlstellen mit einer als Spachtel eingesetzten Beschichtungszusammensetzung wie der Beschichtungszusammensetzung (B).

Vorzugsweise umfasst das in der wenigstens einen Komponente (a) enthaltene wenigstens eine Bindemittel (a1) wenigstens ein wenigstens funktionelle Hydroxyl-Gruppen aufweisendes polymeres Harz. Vorzugsweise enthält das Bindemittel (a1) kein Vernetzungsmittel, d.h. das Bindemittel (a1) ist ein selbstvernetzendes Bindemittel. Wird dennoch ein fremdvernetzendes Bindemittel als Bindemittel (a1) eingesetzt, so enthält dieses vorzugsweise wenigstens ein blockiertes Isocyanat als Vernetzungsmittel.

Besonders bevorzugt umfasst das in der wenigstens einen Komponente (a) enthaltene wenigstens eine Bindemittel (a1) wenigstens ein wenigstens funktionelle Hydroxyl-Gruppen und/oder Carboxyl-Gruppen und/oder Epoxid-Gruppen, insbesondere wenigstens Hydroxyl-Gruppen, aufweisendes polymeres Harz, welches ein Copolymer aus Vinylchlorid und wenigstens einer weiteren ethylenisch ungesättigten Verbindung ist. Als ethylenisch ungesättigte Verbindungen eignen sich insbesondere solche Verbindungen, die wenigstens eine reaktive funktionelle Gruppe ausgewählt aus der Gruppe bestehend aus Vinyl-Gruppen und (Meth)acryl-Gruppen, d.h. Methacryl und/oder Acryl-Gruppen aufweisen. Besonders bevorzugte ethylenisch ungesättigte Verbindungen sind ausgewählt aus der Gruppe bestehend aus Vinylacetat, (Meth)acrylsäureester, insbesondere C₁₋₈-Alkyl (Meth)acrylsäureester, und (Meth)acrylsäure. Bevorzugt liegt der Anteil an umgesetztem Vinylchlorid innerhalb des Copolymeren im Bereich von 50 - 95 Gew.-% und der Anteil an der umgesetzten wenigstens einer weiteren ethylenisch ungesättigten Verbindung im Bereich von 5 - 50 Gew.%, jeweils bezogen auf das Gesamtgewicht des Copolymeren. Entsprechende Produkte sind kommerziell erhältlich und werden beispielsweise unter der Bezeichnung Vinnol® der Firma Wacker oder unter der Bezeichnung UCAR® der Firma Dow vertrieben.

Gegebenenfalls kann das wenigstens eine Bindemittel (a1) zusätzlich oder alternativ wenigstens eine (weitere) polymere Harz-Komponente umfassen, insbesondere wenigstens ein wenigstens funktionelle Hydroxyl-Gruppen und/oder Carboxyl-Gruppen und/oder Epoxid-Gruppen aufweisendes Poly(meth)acrylat.

Gegebenenfalls kann das wenigstens eine Bindemittel (a1) zusätzlich oder alternativ wenigstens eine (weitere) polymere Harz-Komponente umfassen, insbesondere wenigstens ein gegebenenfalls wenigstens funktionelle Hydroxyl-Gruppen und/oder Carboxyl-Gruppen und/oder Epoxid-Gruppen aufweisendes Polyurethan-Polyacrylat-Hybrid-Polymer. Entsprechende Produkte sind kommerziell erhältlich und werden beispielsweise unter der Bezeichnung Hybridur® der Firma Air Products vertrieben, beispielsweise Hybridur® 570 und Hybridur® 870.

Als Mattierungsmittel (a3) eignet sich jedes übliche dem Fachmann bekannte Mattierungsmittel. Vorzugsweise ist das Mattierungsmittel (a3) ausgewählt aus der Gruppe bestehend aus Kieselsäuren, insbesondere natürlichen und synthetischen Kieselsäuren wie pyrogenen Kieselsäuren, amorphen und thermischen Kieselsäuren, Silikaten, und polymeren Mattierungsmitteln, insbesondere Polyamiden und Harnstoff-Formaldeyd-Polymeren. Das Mattierungsmittel (a3) wird nicht zum Bindemittelgehalt (a1) gerechnet. Besonders bevorzugt sind Kieselsäuren und/oder Silikate als Mattierungsmittel (a3). Entsprechende Produkte sind kommerziell erhältlich und werden beispielsweise unter der Bezeichnung Syloid® der Firma Grace vertrieben, beispielsweise Syloid ED 30 oder unter der Bezeichnung Acematt® der Firma Evonik, wie beispielsweise Acematt® TS100 und Acematt® OK412.

Vorzugsweise umfasst die Komponente (a)
wenigstens ein Bindemittel (a1) in einer solchen Menge, dass der Festkörperanteil des wenigstens einen Bindemittels (a1) im Bereich von 5 bis 20 Gew.-%, besonders bevorzugt von 7,5 bis 15 Gew.-%, bezogen auf das Gesamtgewicht von (a) liegt,
wenigstens ein organisches Lösemittel (a2) in einer Menge in einem Bereich von 50 bis 95 Gew.-%, besonders bevorzugt von 60 bis 90 Gew.-%, bezogen auf das Gesamtgewicht von (a),
gegebenenfalls wenigstens ein Mattierungsmittel (a3) in einer solchen Menge, dass der Festkörperanteil des wenigstens einen Mattierungsmittels (a3) im Bereich von 0 bis 10 Gew.-%, besonders bevorzugt von 0 bis 6 Gew.-%, bezogen auf das Gesamtgewicht von (a) liegt,
wobei sich die Bestandteile der Komponente (a) insgesamt auf 100 Gew.-% addieren.

Besonders bevorzugt umfasst die Komponente (a-I)
wenigstens ein Bindemittel (a1) in einer solchen Menge, dass der Festkörperanteil des wenigstens einen Bindemittels (a1) im Bereich von 5 bis 20 Gew.-%, besonders bevorzugt von 7,5 bis 15 Gew.-%, bezogen auf das Gesamtgewicht von (a-I) liegt, und
wenigstens ein organisches Lösemittel (a2) in einer Menge in einem Bereich von 50 bis 95 Gew.-%, besonders bevorzugt von 80 bis 95 Gew.-%, bezogen auf das Gesamtgewicht von (a-I),
wobei sich die Bestandteile der Komponente (a-I) insgesamt auf 100 Gew.-% addieren.

Besonders bevorzugt umfasst die Komponente (a-II)
wenigstens ein Bindemittel (a1) in einer solchen Menge, dass der Festkörperanteil des wenigstens einen Bindemittels (a1) im Bereich von 5 bis 20 Gew.-%, besonders bevorzugt von 7,5 bis 15 Gew.-%, bezogen auf das Gesamtgewicht von (a-II) liegt,
wenigstens ein organisches Lösemittel (a2) in einer Menge in einem Bereich von 50 bis 95 Gew.-%, besonders bevorzugt von 60 bis 90 Gew.-%, bezogen auf das Gesamtgewicht von (a-II),
wenigstens ein Mattierungsmittel (a3) in einer solchen Menge, dass der Festkörperanteil des wenigstens einen Mattierungsmittels (a3) im Bereich von 0 bis 10 Gew.-%, besonders bevorzugt von 0 bis 6 Gew.-%, bezogen auf das Gesamtgewicht von (a-II) liegt,
wobei sich die Bestandteile der Komponente (a-II) insgesamt auf 100 Gew.-% addieren.

### Komponente (b)

Das erfindungsgemäße Mischsystem enthält wenigstens eine Komponente (b).

Komponente (b) des erfindungsgemäßen Mischsystems ist eine von (a) verschiedene vorzugsweise pigmentfreie Basiszusammensetzung zur Herstellung wenigstens einer als Spachtel eingesetzten Beschichtungszusammensetzung (B), wobei (b) wenigstens ein Bindemittel (b1), wenigstens ein organisches Lösemittel (b2) sowie wenigstens einen Füllstoff (b3) umfasst.

Vorzugsweise ist die wenigstens eine Komponente (b) farbneutral, d.h. farblos.

Vorzugsweise umfasst das in der wenigstens einen Komponente (b) enthaltene wenigstens eine Bindemittel (b1) wenigstens einen ungesättigten Polyester als polymere Harz-Komponente, insbesondere wenn das ebenfalls darin enthaltene wenigstens eine organische Lösemittel (b2) ein Reaktivverdünner ist. Gegebenenfalls kann das wenigstens eine Bindemittel (b1) zusätzlich oder alternativ wenigstens ein Polyurethan als polymere Harz-Komponente umfassen.

Die Herstellung solcher ungesättigten Polyester ist dem Fachmann bekannt. Insbesondere eignen sich als ungesättige Polyester solche Polyester, die sich von Polyolen, insbesondere Diolen und/oder Triolen wie z.B. Ethylenglykol, 1,2-Propylenglykol, 1,3-Propylenglykol, 1,4-Butandiol, Diethylenglykol, Dipropylenglykol und/oder Neopentylglykol und wenigstens einfach ungesättigten Polycarbonsäuren wie entsprechenden wenigstens einfach ungesättigten Tri- und/oder Dicarbonsäuren, beispielsweise Maleinsäure, Maleinsäureanhydrid, Fumarsäure, Itaconsäure, Mesaconsäure und/oder Citronensäure sowie jeweils von geeigneten Derivaten davon wie beispielsweise Estern oder Anhydriden, ableiten. Zur Herstellung der ungesättigten Polyester können zudem zusätzlich gesättigte Polycarbonsäuren, insbesondere gesättigte Dicarbonsäuren wie z.B. Adipinsäure, Orthophtalsäure, Phthalsäure(anhydrid), Tetrahydrophthalsäure(anhydrid) und/oder Isophthalsäure und/oder gegebenenfalls geeignete vorzugsweise gesättigte Monocarbonsäuren, insbesondere wenn Triole als Polyol-Komponente eingesetzt werden, und/oder gesättigte Monoalkohole eingesetzt werden. Die Aushärtung bzw. Vernetzung solcher ungesättigten Polyester kann durch Verbindungen erfolgen, die eine radikalische Polymerisation als Aushärtungsreaktion ermöglichen, welche z.B. durch die Zersetzung organischer Peroxide initiiert wird. Die Zersetzung der Peroxide erfolgt über Temperatureinfluss und/oder die Anwesenheit von Beschleunigern wie metallischen Salzen wie z.B. Cobaltoctoat. Da es sich um eine radikalische Polymerisation handelt, bedarf es keiner stöchiometrischen Auslegung der ungesättigten Polyester und dem zu verwendenden Vernetzungsmittel, d.h. letzteres kann in nur geringen, vorzugsweise katalytischen Mengen eingesetzt werden. Geeignete kommerziell erhältliche Produkte sind beispielsweise Roskydal®-Produkte der Firma Bayer, Ludopal®-Produkte der Firma BASF und Synolite®-Produkte der Firma DSM.

Umfasst das Bindemittel (b1) zusätzlich oder alternativ wenigstens ein Polyurethan als polymeres Harz, so eignen sich insbesondere solche Polyurethan-basierten Harze, die durch eine Polyadditionsreaktion zwischen hydroxylgruppenhaltigen Verbindungen wie Polyolen (wie z.B. Hydroxylgruppen von Polyestern oder hydroxylgruppenhaltigen Polyethern sowie Mischungen davon) und wenigstens einem Polyisocyanat (aromatische und aliphatische Isocyanate oder Di- und Polyisocyanate). Dabei ist üblicherweise ein stöchiometrischer Umsatz der OH-Gruppen der Polyole mit den NCO-Gruppen der Polyisocyanate erforderlich. Jedoch kann das einzusetzende stöchiometrische Verhältnis auch variiert werden, da das Polyisocyanat in solchen Mengen zu der Polyol-Komponente gegeben werden kann, dass es zu einer "Übervernetzung" oder zu einer "Untervernetzung" kommen kann.

Als organisches Lösemittel (b2) wird vorzugsweise wenigstens ein Reaktivverdünner eingesetzt. Alle üblichen Reaktivverdünner können als (b2) eingesetzt werden. Vorzugsweise enthält der eingesetzte Reaktivverdünner wenigstens eine ethylenisch ungesättigte Doppelbindung. Vorzugsweise ist der Reaktivverdünner ausgewählt aus der Gruppe bestehend aus Verbindungen, die wenigstens eine funktionelle Gruppe ausgewählt aus der Gruppe bestehend aus Vinyl-Gruppen, Allyl-Gruppen und (Meth)acryl-Gruppen aufweisen. Die Reaktivverdünner können mono-, di- oder polyungesättigt sein. Beispiele für monoungesättigte Reaktivverdünner sind (Meth)acrylsäure und deren Ester, Maleinsäure und deren Halbester, Vinylacetat, Vinylether, substituierte Vinylharnstoffe, Styrol, Vinyltoluol. Beispiele für zweifach ungesättigte Reaktivverdünner sind Di(meth)acrylate wie Alkylenglykoldi(meth)acrylat, Polyethylenglykol-di(meth)acrylat, 1,3-Butandiol-di(meth)acrylat, Vinyl(meth)acrylat, Allyl(meth)acrylat, Divinylbenzol, Dipropylenglykoldi(meth)acrylat, Hexandiol-di(meth)acrylat. Beispiele für polyungesättigte Reaktivverdünner sind Glycerin-tri(meth)acrylat, Trimethylolpropan-tri(meth)acrylat, Pentaerythrit-tri(meth)acrylat, Pentaerythrit-tetra(meth)acrylat. Die Reaktivverdünner können einzeln oder im Gemisch eingesetzt werden. Bevorzugt werden als Reaktivverdünner Verbindungen mit wenigstens einer Vinyl-Gruppe, insbesondere Styrol, eingesetzt.

Komponente (b) kann gegebenenfalls - wenn (b2) ein Reaktivverdünner ist - zudem wenigstens ein weiteres organisches Lösemittel enthalten. Hierfür eignen sich alle organischen Lösemittel, die auch als (a2) innerhalb der Komponente (a) eingesetzt werden können.

Enthält Komponente (b) ein Polyurethan als polymeres Harz des Bindemittels (b1), so ist (b2) vorzugsweise kein Reaktivverdünner wie Styrol, sondern wenigstens ein organisches Lösemittel, insbesondere dann wenn das Bindemittel keinen ungesättigten Polyester enthält. Hierfür eignen sich alle organischen Lösemittel, die auch als (a2) innerhalb der Komponente (a) eingesetzt werden können.

Komponente (b) enthält wenigstens einen Füllstoff (b3).

Der Begriff "Füllstoff" ist dem Fachmann bekannt, beispielsweise aus der DIN 55945 (Datum: Oktober 2001). Unter einem "Füllstoff" wird im Sinne der vorliegenden Erfindung vorzugsweise eine im Anwendungsmedium wie beispielsweise einer Beschichtungszusammensetzung (B) und/oder der Komponente (b) im Wesentlichen unlösliche Substanz verstanden, die insbesondere zur Vergrößerung des Volumens eingesetzt wird. Vorzugsweise unterscheiden sich "Füllstoffe" im Sinne der vorliegenden Erfindung von "Pigmenten" durch ihren Brechungsindex, der für Füllstoffe <1,7 beträgt.

Jeder übliche dem Fachmann bekannte Füllstoff kann als Komponente (b3) eingesetzt werden. Beispiele geeigneter Füllstoffe sind Kaolin, Dolomit, Calcid, Kreide, Calciumsulfat, Bariumsulfat, Graphit, Silikate wie Magnesiumsilikate" insbesondere entsprechende Schichtsilikate wie Hectorit, Bentonit, Montmorillonit, Talkum und/oder Glimmer, Kieselsäuren, insbesondere pyrogene Kieselsäuren, Hydroxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen.

Komponente (b) ist vorzugsweise pigmentfrei, kann jedoch alternativ gegebenenfalls wenigstens ein Pigment enthalten. Als Pigmente eignen sich alle Pigmente, die auch als Bestandteil (c3) der Komponente (c) eingesetzt werden können, wie beispielsweise Titandioxid. Gegebenenfalls vorhandenes Pigment kann in den gleichen Mengen eingesetzt werden wie er Füllstoff (b3). Vorzugsweise ist Komponente (b) jedoch pigmentfrei.

Vorzugsweise umfasst die Komponente (b)
wenigstens ein Bindemittel (b1) in einer solchen Menge, dass der Festkörperanteil des wenigstens einen Bindemittels (b1) im Bereich von 40 bis 90 Gew.-%, besonders bevorzugt von 45 bis 80 Gew.-%, bezogen auf das Gesamtgewicht von (b) liegt,
wenigstens ein organisches Lösemittel (b2) in einer Menge in einem Bereich von 5 bis 20 Gew.-%, besonders bevorzugt von 5 bis 15 Gew.-%, bezogen auf das Gesamtgewicht von (b), und
wenigstens einen Füllstoff (b3) in einer Menge in einem Bereich von 15 bis 40 Gew.-%, besonders bevorzugt von 20 bis 35 Gew.-%, bezogen auf das Gesamtgewicht von (b),
wobei sich die Bestandteile der Komponente (b) insgesamt auf 100 Gew.-% addieren.

### Komponenten (c)

Das erfindungsgemäße Mischsystem enthält mehrere unterschiedliche Komponenten (c), insbesondere eine solche Anzahl unterschiedlicher Komponenten (c), die in einem Bereich von 2 bis 25, vorzugsweise von 3 bis 20 oder von 4 bis 15 oder von 4 bis 10 liegt.

Die Komponenten (c) des erfindungsgemäßen Mischsystems sind mehrere unterschiedliche Pigmentpasten, welche jeweils unabhängig voneinander wenigstens ein Bindemittel (c1), wenigstens ein organisches Lösemittel (c2) sowie wenigstens ein Pigment (c3) umfassen.

Die mehreren Pigmentpasten (c) sind sowohl von Komponente (a) als auch von Komponente (b) als auch von Komponente (d) und gegebenenfalls (e) verschieden.

Das in (c1) enthaltene polymere Harz ist vorzugsweise wenigstens ein Reibharz. Vorzugsweise umfasst das in der wenigstens einen Komponente (c) enthaltene wenigstens eine Bindemittel (c1) wenigstens ein polymeres Kondensationsprodukt aus Harnstoff und/oder Formaldehyd und wenigstens einem vorzugsweise aliphatischen wie beispielsweise einem C₁₋₁₀-aliphatischen Aldehyden und/oder wenigstens einem vorzugsweise (cyclo)aliphatischen Keton, beispielsweise Cyclohexanon oder Methylcyclohexanon, als polymere Harz-Komponente. Solche polymeren Harze und deren Herstellung sind beispielsweise bekannt aus EP 2 597 122 A1. Besonders bevorzugt umfasst das in der wenigstens einen Komponente (c) enthaltene wenigstens eine Bindemittel (c1) wenigstens ein polymeres Kondensationsprodukt aus Harnstoff und wenigstens einem aliphatischen Aldehyden als polymere Harz-Komponente. Geeignete kommerziell erhältliche Produkte sind beispielsweise Laropal®-Produkte der Firma BASF.

Der Begriff "Pigment" ist dem Fachmann bekannt, beispielsweise aus der DIN 55945 (Datum: Oktober 2001). Unter einem "Pigment" werden im Sinne der vorliegenden Erfindung vorzugsweise pulver- oder plättchenförmige Verbindungen verstanden, die in dem sie umgebenden Medium, wie beispielsweise in der Komponente (c), der Decklackzusammensetzung (A) einschließlich (A1) und/oder (A2) oder der Beschichtungszusammensetzung (B), im Wesentlichen, vorzugsweise vollständig. unlöslich sind. Bei diesen Substanzen handelt es sich vorzugsweise um Farbmittel und/oder um Substanzen, die aufgrund ihrer magnetischen, elektrischen und/oder elektromagnetischen Eigenschaften als Pigment eingesetzt werden können. Von "Füllstoffen" unterscheiden sich Pigmente vorzugsweise durch ihren Brechungsindex, der für Pigmente ≥1,7 beträgt.

Pigment (c3) ist vorzugsweise ausgewählt aus der Gruppe bestehend aus anorganischen und organischen farbgebenden Pigmenten, Effektpigmenten sowie Mischungen davon.

Beispiele für geeignete anorganische farbgebende Pigmente sind Weißpigmente wie Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat. Weiter anorganische farbgebende Pigmente sind Siliziumdioxid, Aluminiumoxid, Aluminiumoxidhydrat, insbesondere Böhmit, Titandioxid, Zirkoniumoxid, Ceroxid und Mischungen hiervon.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ein Fachmann ist mit dem Begriff der Effektpigmente vertraut. Insbesondere handelt es sich bei Effektpigmenten um solche Pigmente sind, die optisch effektgebend oder farb- und optisch effektgebend, insbesondere optisch effektgebend sind. Eine entsprechende Einteilung der Pigmente kann nach DIN 55944 (Datum: Dezember 2011) erfolgen. Vorzugsweise werden die Effektpigmente aus der Gruppe bestehend aus organischen und anorganischen, optisch effektgebenden, farb- und optisch effektgebenden, Pigmenten, ausgewählt. Bevorzugt werden sie aus der Gruppe bestehend aus organischen und anorganischen, optisch effektgebenden oder farb- und optisch effektgebenden Pigmenten, ausgewählt. Insbesondere werden die organischen und anorganischen, optisch effektgebenden und farb- und optisch effektgebenden Pigmente aus der Gruppe bestehend aus gegebenenfalls beschichteten Metalleffektpigmenten, aus gegebenenfalls beschichteten Metalloxideffektpigmenten, aus aus gegebenenfalls beschichteten Metallen und Nichtmetallen zusammengesetzten Effektpigmenten und gegebenenfalls beschichteten nichtmetallischen Effektpigmenten ausgewählt. Insbesondere sind die gegebenenfalls beschichteten wie z.B. silikatbeschichteten Metalleffektpigmente Aluminiumeffektpigmente, Eiseneffektpigmente oder Kupfereffektpigmente. Ganz besonders bevorzugt sind gegebenenfalls beschichtete wie z.B. silikatbeschichtete Aluminiumeffektpigmente, insbesondere kommerziell erhältliche Produkte der Firma Eckart wie Stapa® Hydrolac, Stapa® Hydroxal, Stapa® Hydrolux und Stapa® Hydrolan, am meisten bevorzugt Stapa® Hydrolux und Stapa® Hydrolan. Die erfindungsgemäß eingesetzten Effektpigmente, insbesondere gegebenenfalls beschichtete wie z.B. silikatbeschichteten Aluminiumeffektpigmente, können in jeder üblichen dem Fachmann bekannten Form wie z.B. einer Blättchen- und/oder einer Plättchenform, insbesondere einer (Corn)flake- oder einer Silverdollar-Form vorliegen. Insbesondere sind die aus Metallen und Nichtmetallen zusammengesetzten Effektpigmente mit Eisenoxid beschichtete plättchenförmige Aluminiumpigmente, wie sie beispielsweise in der europäischen Patentanmeldung EP 0 562 329 A2 beschrieben werden; Glasblättchen, die mit Metallen, insbesondere Aluminium, beschichtet sind; oder Interferenzpigmente, die eine Reflektorschicht aus Metall, insbesondere Aluminium, enthalten und einen starken Farbflop aufweisen. Insbesondere sind die nichtmetallischen Effektpigmente Perlglanzpigmente, insbesondere Micapigmente; mit Metalloxiden beschichtete, plättchenförmige Graphitpigmente; Interferenzpigmente, die keine Reflektorschicht aus Metall enthalten und einen starken Farbflop aufweisen; plättchenförmige Effektpigmente auf der Basis von Eisenoxid, die einen Farbton von Rosa bis Braunrot aufweisen; oder organische, flüssigkristalline Effektpigmente. Ergänzend wird hinsichtlich der erfindungsgemäß eingesetzten Effektpigmente auf Römpp Lexikon Lacke und Druckfarben, Georg Thieme Verlag, 1998, Seiten 176, «Effektpigmente» und Seiten 380 und 381, »Metalloxid-Glimmer-Pigmente« bis «Metallpigmente», verwiesen.

Als Komponente (c) können kommerziell erhältliche Produkte wie beispielsweise Salcomix®-Produkte und Microlith®-Produkte der Firma BASF eingesetzt werden.

Vorzugsweise umfasst die Komponente (c)
wenigstens ein Bindemittel (c1) in einer solchen Menge, dass der Festkörperanteil des wenigstens einen Bindemittels (c1) im Bereich von 5 bis 40 Gew.-%, besonders bevorzugt von 10 bis 35 Gew.-%, bezogen auf das Gesamtgewicht von (c) liegt,
wenigstens ein organisches Lösemittel (c2) in einer Menge in einem Bereich von 30 bis 90 Gew.-%, besonders bevorzugt von 35 bis 75 Gew.-% oder von 35 bis 65 Gew.-%, bezogen auf das Gesamtgewicht von (c), und
wenigstens ein Pigment (c3) in einer Menge in einem Bereich von 5 bis 40 Gew.-%, besonders bevorzugt von 5 bis 35 Gew.-%, bezogen auf das Gesamtgewicht von (c),
wobei sich die Bestandteile der Komponente (c) insgesamt auf 100 Gew.-% addieren.

### Komponente (d)

Das erfindungsgemäße Mischsystem enthält mehrere unterschiedliche Komponenten (d), insbesondere eine solche Anzahl unterschiedlicher Komponenten (d), die in einem Bereich von 2 bis 25, vorzugsweise von 3 bis 20 oder von 4 bis 15 oder von 5 bis 12 liegt.

Die Komponenten (d) des erfindungsgemäßen Mischsystems sind mehrere unterschiedliche bindemittelfreie Farbstofflösungen, welche jeweils unabhängig voneinander wenigstens ein organisches Lösemittel (d1) und wenigstens einen Farbstoff (d2) umfassen.

Vorzugsweise ist der in der Komponente (d) enthaltene wenigstens eine Farbstoff (d2) ausgewählt aus der Gruppe bestehend aus sauren Farbstoffen (anionischen Farbstoffen), basischen Farbstoffen (kationischen Farbstoffen), fettlöslichen Farbstoffen und Metallkomplexfarbstoffen sowie Mischungen davon. Insbesondere ist der in der Komponente (d) enthaltene wenigstens eine Farbstoff (d2) ausgewählt aus der Gruppe bestehend aus basischen Farbstoffen (kationischen Farbstoffen), fettlöslichen Farbstoffen und Metallkomplexfarbstoffen sowie Mischungen davon.

Der Begriff "Farbstoff" ist dem Fachmann bekannt, beispielsweise aus der DIN 55945 (Datum: Oktober 2001). Unter einem "Farbstoff" wird im Sinne der vorliegenden Erfindung vorzugsweise eine Verbindung verstanden, die in dem sie umgebenden Medium, wie beispielsweise in der Komponente (d), vollständig löslich ist. Die Löslichkeit wird dabei nach DIN EN ISO 7579 (Datum: März 2010) bestimmt. Die optische Wirkung eines Farbstoffs beruht dabei auf nichtselektiver Lichtabsorption.

Beispiele für basische Farbstoffe sind insbesondere solche Farbstoffe, die wenigstens eine deprotonierbare Carbonsäure- und/oder Sulfonsäure-Gruppe aufweisen. Basische Farbstoffe sind insbesondere in polaren Lösemitteln wie Aceton, Alkoholen und/oder Glykolen löslich. Basische Farbstoffe weisen wenigstens eine positive Ladung innerhalb des Moleküls auf. Beispiele für saure Farbstoffe sind insbesondere solche Farbstoffe, die wenigstens eine Carbonsäure- und/oder Sulfonsäure-Gruppe aufweisen. Beispiele für fettlösliche Farbstoffe sind nichtionische Azo- und Anthrachinonfarbstoffe, Fettlösliche Farbstoffe sind insbesondere in aromatischen und aliphatischen Kohlenwasserstoffen als Lösemittel löslich. Metallkomplexfarbstoffe sind vorzugsweise anionische Chrom- und/oder Kobalt- und/oder Kupfer- und/oder Nickel-Komplexe von Azofarbstoffen oder gegebenenfalls substituierten Phthalocyaninen. Metallkomplexfarbstoffe sind insbesondere löslich in Alkoholen, Glykolen, Ketonen und/oder Estern. Geeignete als Farbstoff (d2) einsetzbare Farbstoffe sind kommerziell erhältlich, beispielsweise unter den Bezeichnungen Irgasperse® der Firma BASF wie beispielsweise Irgasperse® Brown 4R-U2, Irgasperse® Rot und Irgasperse® Gelb, Neozapon® der Firma BASF wie beispielsweise Neozapon® Grün 975 und Neozapon® Rot 395 oder Orasol® der Firma BASF wie beispielsweise Orasol® Gelb und Orasol® Rot.

Als bevorzugte Lösemittel (d1) eignet sich insbesondere wenigstens ein Lösemittel ausgewählt aus der Gruppe bestehend aus Butylacetat, Isopropanol, Ethylacetat, Ethanol und Methoxypropylacetat.

Vorzugsweise umfasst die Komponente (d)
wenigstens ein organisches Lösemittel (d1) in einer Menge in einem Bereich von 90 bis 99,9 Gew.-%, besonders bevorzugt von 92,5 bis 99,5 Gew.-%, bezogen auf das Gesamtgewicht von (d), und
wenigstens einen Farbstoff (d2) in einer Menge in einem Bereich von 0,1 bis 10 Gew.-%, besonders bevorzugt von 0,5 bis 7,5 Gew.-%, bezogen auf das Gesamtgewicht von (d),
wobei sich die Bestandteile der Komponente (d) insgesamt auf 100 Gew.-% addieren.

### Optionale Komponenten

Das erfindungsgemäße Mischsystem enthält gegebenenfalls wenigstens eine Komponenten (e).

Komponente (e) des erfindungsgemäßen Mischsystems ist/sind ein oder mehrere unterschiedliche organische Lösemittel. Als Lösemittel eignen sich alle Lösemittel, die bereits im Zusammenhang mit der Komponente (a2) erwähnt worden sind.

Komponente (e) kann gegebenenfalls wenigstens ein Additiv und/oder wenigstens ein Vernetzungsmittel enthalten. Als gegebenenfalls in (e) vorhandenes Additiv wird vorzugsweise wenigstens ein Additiv ausgewählt aus der Gruppe bestehend aus Antiabsetzmitteln eingesetzt. Entsprechende Produkte sind kommerziell erhältlich und werden beispielsweise unter der Bezeichnung Byk® E410, Aerosil® 200 oder Bentone® SD10 vetrieben.

Vorzugsweise umfasst die Komponente (e)
wenigstens ein organisches Lösemittel in einer Menge in einem Bereich von 90 bis 99,9 Gew.-%, besonders bevorzugt von 92,5 bis 99,5 Gew.-%, bezogen auf das Gesamtgewicht von (e), und
wenigstens ein Additiv in einer Menge in einem Bereich von 0,1 bis 10 Gew.-%, besonders bevorzugt von 0,5 bis 7,5 Gew.-%, bezogen auf das Gesamtgewicht von (e),
wobei sich die Bestandteile der Komponente (e) insgesamt auf 100 Gew.-% addieren.

### Mischsystem

Das erfindungsgemäße Mischsystem umfasst vorzugsweise wenigstens eine Mischvorrichtung bzw. wenigstens eine Mischstation. Beispielsweise eignet sich als Mischvorrichtung die Dosieranlage HA 450 der Firma Fast & Fluid oder die Dosieranlage CPS Corob D800 der Firma CPS Color, insbesondere jeweils in Kombination mit einem Vibrationsmischer wie beispielsweise dem Gerät Scandex SK 550 der Firma Fast & Fluid oder CPS Corob Sample Mix 30 oder 90 der Firma CPS Color oder in Kombination mit einem Biaxialmischer wie dem Gerät CPS Corob Clevermix 20-10-500-550 der Firma CPS Color.

Vorzugsweise umfasst das erfindungsgemäße Mischsystem eine volumetrische Dosieranlage als Mischvorrichtung. Alternativ eignet sich auch ein erfindungsgemäßes Mischsystem, welches eine gravimetrische Dosieranlage umfasst.

Vorzugsweise ist das erfindungsgemäße Mischsystem automatisiert, insbesondere damit immer der gleiche gewünschte jeweilige Farbton erhalten wird. Das Abmischen erfolgt vorzugsweise volumetrisch.

Die im erfindungsgemäßen Mischsystem enthaltene Mischvorrichtung enthält dabei vorzugsweise eine geeignete Dosieranlagensteuerungssoftware, mittels derer die automatisierte volumetrische Mischung zur Herstellung von (A), insbesondere von (A1) und/oder (A2), (B) und/oder wenigstens einer Klarlackzusammensetzung erzielt wird.

Vorzugsweise umfasst das erfindungsgemäße Mischsystem wenigstens eine Mischvorrichtung, wobei die Mischvorrichtung wenigstens eine Komponente (a), insbesondere (a-I) und (a-II), mehrere unterschiedliche Komponenten (c), mehrere unterschiedliche Komponenten (d) und gegebenenfalls wenigstens eine Komponente (e). Gegebenenfalls kann die im erfindungsgemäßen Mischsystem enthaltene Mischvorrichtung zudem wenigstens eine Komponente (b) enthalten. Alternativ kann das erfindungsgemäße Mischsystem die wenigstens eine Mischvorrichtung und wenigstens eine davon separiert vorliegende Komponente (b) enthalten.

### Verwendung des Mischsystems

Das erfindungsgemäße Mischsystem ist zur Herstellung von Decklackzusammensetzungen und Spachteln geeignet. Das erfindungsgemäße Mischsystem ist zudem zur Herstellung von Klarlackzusammensetzungen geeignet Ein weiterer Gegenstand der vorliegenden Erfindung ist daher eine Verwendung des erfindungsgemäßen Mischsystems zur Herstellung von Decklackzusammensetzungen und Spachteln sowie gegebenenfalls Klarlackzusammensetzungen.

Vorzugsweise werden dabei mittels des erfindungsgemäßen Mischsystems wenigstens eine als Kantenfarbe eingesetzte Decklackzusammensetzung (A1) und/oder wenigstens eine als Retuschierfarbe eingesetzte und von (A1) verschiedene Decklackzusammensetzung (A2), und wenigstens eine als Spachtel eingesetzte Beschichtungszusammensetzung (B) hergestellt. Gegebenenfalls wird dabei zudem wenigstens eine Klarlackzusammensetzung hergestellt, vorzugsweise aus wenigstens einer Komponente (a) und wenigstens einer Komponente (d).

Alle im Zusammenhang mit dem erfindungsgemäßen Mischsystem hierin zuvor beschriebenen bevorzugten Ausführungsformen sind auch bevorzugte Ausführungsformen des erfindungsgemäßen Mischsystems hinsichtlich seiner Verwendung zur Herstellung von Decklackzusammensetzungen und Spachteln sowie gegebenenfalls Klarlackzusammensetzungen.

### Verfahren zur Herstellung von Decklackzusammensetzungen und Spachteln

Ein weiterer Gegenstand der vorliegenden Erfindung ist ein Verfahren zur Herstellung von Decklackzusammensetzungen und/oder Spachteln sowie gegebenenfalls Klarlackzusammensetzungen, dadurch gekennzeichnet, dass hierfür das erfindungsgemäße Mischsystem eingesetzt wird.

Vorzugsweise erfolgt mittels des erfindungsgemäßen Verfahrens die Herstellung von wenigstens einer Decklackzusammensetzung (A1) und/oder wenigstens einer weiteren von (A1) verschiedenen Decklackzusammensetzung (A2) und wenigstens einer als Spachtel eingesetzten Beschichtungszusammensetzung (B).

Vorzugsweise umfasst das erfindungsgemäße Verfahren wenigstens einen der Schritte (1) und (2) und zudem den Schritt (3), nämlich
(1) Mischen wenigstens einer Komponente (a) wie beispielsweise der Komponente (a-I) mit wenigstens einer Pigmentpaste (c) und gegebenenfalls mit wenigstens einer Farbstofflösung (d) und gegebenenfalls mit wenigstens einer Komponente (e) zur Herstellung wenigstens einer Decklackzusammensetzung (A1), und/oder
(2) Mischen wenigstens einer Komponente (a) wie beispielsweise der Komponente (a-II) mit wenigstens einer Pigmentpaste (c) und gegebenenfalls mit wenigstens einer Farbstofflösung (d) und gegebenenfalls mit wenigstens einer Komponente (e) zur Herstellung wenigstens einer Decklackzusammensetzung (A2),
   wobei Komponente (a) im Fall von Schritt (2) neben dem wenigstens einen Bindemittel (a1) und dem wenigstens einen organisches Lösemittel (a2) wenigstens ein Mattierungsmittel (a3) umfasst,
(3) Mischen wenigstens einer Komponente (b) mit wenigstens einer Pigmentpaste (c) und gegebenenfalls mit wenigstens einer Farbstofflösung (d) und gegebenenfalls mit wenigstens einer Komponente (e) zur Herstellung wenigstens einer als Spachtel eingesetzten Beschichtungszusammensetzung (B).
   Gegebenenfalls kann das erfindungsgemäße Verfahren zudem einen Schritt (4) umfassen, nämlich
(4) Mischen wenigstens einer Komponente (a) mit wenigstens einer Farbstofflösung (d) und gegebenenfalls mit wenigstens einer Komponente (e) zur Herstellung wenigstens einer als Klarlackzusammensetzung eingesetzten Beschichtungszusammensetzung.

Vorzugsweise werden die Decklackzusammensetzung (A), insbesondere (A1) und/oder (A2), und die als Spachtel eingesetzte Beschichtungszusammensetzung erst kurz vor ihrer angedachten Applikation in dem erfindungsgemäßen Mischsystem durch Mischen der jeweiligen benötigten entsprechenden Komponenten hergestellt. (A2) ist vorzugsweise eine als Kantenfarbe einsetzbare Decklackzusammensetzung und (A1) ist vorzugsweise eine als Retschuschierfarbe einsetzbare Decklackzusammensetzung.

In einer bevorzugten Ausführungsform enthält die als Retuschierfarbe einsetzbare Decklackzusammensetzung (A1)
wenigstens eine Komponente (a) wie beispielsweise wenigstens einer Komponente (a-I) in einer Menge in einem Bereich von 50 bis 95 Gew.-%,
wenigstens eine Pigmentpaste (c) in einer Menge in einem Bereich von 5 bis 30 Gew.-%,
wenigstens eine Farbstofflösung (d) in einer Menge in einem Bereich von 0 bis 15 Gew.-%, vorzugsweise von 0,1 bis 15 Gew.-%,
wenigstens eine Komponente (e) in einer Menge in einem Bereich von 0 bis 30 Gew.-%,
jeweils bezogen auf das Gesamtgewicht von (A1), wobei sich die jeweiligen Anteile in Gew.-% insgesamt auf 100 Gew.-% addieren.

In einer bevorzugten Ausführungsform enthält die als Kantenfarbe einsetzbare Decklackzusammensetzung (A2)
wenigstens eine Komponente (a) wie beispielsweise wenigstens einer Komponente (a-II) in einer Menge in einem Bereich von 50 bis 95 Gew.-%,
wenigstens eine Pigmentpaste (c) in einer Menge in einem Bereich von 5 bis 30 Gew.-%,
wenigstens eine Farbstofflösung (d) in einer Menge in einem Bereich von 0 bis 15 Gew.-%, vorzugsweise von 0,1 bis 15 Gew.-%,
wenigstens eine Komponente (e) in einer Menge in einem Bereich von 0 bis 30 Gew.-%,
jeweils bezogen auf das Gesamtgewicht von (A2), wobei sich die jeweiligen Anteile in Gew.-% insgesamt auf 100 Gew.-% addieren.

In einer bevorzugten Ausführungsform enthält die als Spachtel einsetzbare Beschichtungszusammensetzung (B)
wenigstens eine Komponente (b) in einer Menge in einem Bereich von 30 bis 80 Gew.-%,
wenigstens eine Pigmentpaste (c) in einer Menge in einem Bereich von 2,5 bis 30 Gew.-%,
wenigstens eine Farbstofflösung (d) in einer Menge in einem Bereich von 0 bis 15 Gew.-%, vorzugsweise von 0,1 bis 15 Gew.-%,
wenigstens eine Komponente (e) in einer Menge in einem Bereich von 0 bis 30 Gew.-%,
jeweils bezogen auf das Gesamtgewicht von (B), wobei sich die jeweiligen Anteile in Gew.-% insgesamt auf 100 Gew.-% addieren.

Vorzugsweise ist dem erfindungsgemäßen Verfahren ein Schritt (0) vorgelagert, in dem die erfindungsgemäß eingesetzten Komponenten (a), (b), (c), (d) und gegebenenfalls (e) zunächst separat hergestellt werden und gegebenenfalls gelagert werden, insbesondere durch Zusammengeben und Vermischen der jeweiligen einzelnen Bestandteile.

Alle im Zusammenhang mit dem erfindungsgemäßen Mischsystem hierin zuvor beschriebenen bevorzugten Ausführungsformen sind auch bevorzugte Ausführungsformen des erfindungsgemäßen Mischsystems hinsichtlich seines Einsatzes im erfindungsgemäßen Verfahren zur Herstellung von Decklackzusammensetzungen und Spachteln.

### Verwendung der erhältlichen Decklackzusammensetzungen und Spachtel zum Ausbessern von Fehlstellen auf oder in Holz

Ein weiterer Gegenstand der vorliegenden Erfindung ist eine Verwendung der nach dem erfindungsgemäßen Verfahren erhältlichen Decklackzusammensetzung (A), insbesondere (A1) und/oder (A2), und der als Spachtel eingesetzten Beschichtungszusammensetzung (B) zum Ausbessern von Fehlstellen auf oder in Holz. Gegebenenfalls kann darüber eine Klarlackzusammensetzung appliziert werden, die aus Mischen wenigstens einer Komponente (a) und wenigstens einer Komponente (d) erhältlich ist.

Vorzugsweise wird die Decklackzusammensetzung (A1) dabei als Retuschierfarbe, die Decklackzusammensetzung (A2) als Kantenfarbe und die Beschichtungszusammensetzung (B) als Spachtel eingesetzt. Nach Ausbessern der Fehlstelle mit dem Spachtel zum Ausgleich von Unebenheiten und optionalen nachfolgendem Schleifen wird im Anschluss vorzugsweise nach Aushärtung des Spachtels auf die so behandelte Fehlstelle die Decklackzusammensetzung (A1) als Retuschierfarbe appliziert, vorzugsweise wenn sich die Fehlstelle inmitten einer zumindest weitestgehend ebenen Fläche befindet oder auf die so behandelte Fehlstelle die Decklackzusammensetzung (A2) als Kantenfarbe appliziert, vorzugsweise wenn sich die Fehlstelle an einer Kante befindet. Die als Kantenfarbe eingesetzte Decklackzusammensetzung (A2) wird jedoch vorzugsweise zur Abdeckung von Kanten wie Stoßkanten oder Fräskanten eingesetzt. Der Spachtel wird dabei vorzugsweise manuell aufgetragen, wohingegen der Auftrag von (A1) und/oder (A2) vorzugsweise durch Spritzen geschieht, beispielsweise mittels einer pneumatischen Spritzpistole. Im Anschluss an den Auftrag von (A1) und/oder (A2) kann die ausgebesserte Fehlstelle gegebenenfalls poliert werden.

Die auszubessernden Fehlstellen befinden sich beispielsweise in entsprechenden Armaturenbrettern aus Holz oder Holzbestandteilen in Automobilen.

Als Fehlstellen kommen beispielsweise durch gerissene Furniere entstandene Fehlstellen oder Astlöcher in Betracht. Stoßkanten können beispielsweise dadurch entstehen, dass ein Holzgegenstand unterschiedliche Furnierblätter aus Holz aufweist, wodurch eine uneinheitliche Holzstruktur resultiert.

### Verfahren zur Einstellung und/oder Abstimmung von Farbtönen

Ein weiterer Gegenstand der vorliegenden Erfindung ist ein Verfahren zur Einstellung und/oder Abstimmung von Farbtönen der wenigstens einen Decklackzusammensetzung (A1) und/oder wenigstens einen weiteren von (A1) verschiedenen Decklackzusammensetzung (A2) und der wenigstens einen als Spachtel eingesetzten Beschichtungszusammensetzung (B), dadurch gekennzeichnet, dass hierfür das erfindungsgemäße Mischsystem eingesetzt wird. Mittels des Mischsystems sind die wenigstens eine Decklackzusammensetzung (A1) und/oder die wenigstens einen weitere von (A1) verschiedene Decklackzusammensetzung (A2) und die wenigstens eine als Spachtel eingesetzte Beschichtungszusammensetzung (B) erhältlich.

Alle im Zusammenhang mit dem erfindungsgemäßen Mischsystem hierin zuvor beschriebenen bevorzugten Ausführungsformen sind auch bevorzugte Ausführungsformen des erfindungsgemäßen Mischsystems hinsichtlich seines Einsatzes im erfindungsgemäßen Verfahren zur Verfahren zur Einstellung und/oder Abstimmung von Farbtönen.

Die nachfolgenden Beispiele dienen der Erläuterung der Erfindung, sind jedoch nicht einschränkend auszulegen.

Es wird ein Mischsystem eingesetzt, welches eine volumetrische Dosieranlage HA 450 der Firma Fast & Fluid in Kombination mit dem Vibrationsmischer Scandex SK 550 der Firma Fast & Fluid als Mischvorrichtung umfasst. In diese Mischvorrichtung werden die folgenden Komponenten gegeben: Die Mischvorrichtung enthält wenigstens eine wie beispielsweise genau eine Komponente (a-I) und wenigstens eine wie beispielsweise genau eine Komponente (a-II). Komponente (a-II) unterscheidet sich von der Komponente (a-I) wenigstens durch die Gegenwart wenigstens eines darin enthaltenen Mattierungsmittels (a3). Sowohl (a-I) als auch (a-II) weisen ein Gesamtgewicht im Bereich von 15 bis 20 kg auf. Die Mischvorrichtung enthält zudem 4 bis 10 jeweils voneinander verschiedene Komponenten (c) und 5 bis 12 jeweils voneinander verschiedene Komponenten (d). Die einzelnen Komponenten (c) weisen jeweils ein Gesamtgewicht von 5 bis 7 kg wie beispielsweise 6 kg und die einzelnen Komponenten (d) weisen ebenfalls jeweils ein Gesamtgewicht von 5 bis 7 kg wie beispielsweise 6 kg auf. Die Mischvorrichtung enthält dabei eine geeignete Dosieranlagensteuerungssoftware, mittels derer die automatisierte volumetrische Mischung zur Herstellung von (A), insbesondere von (A1) und/oder (A2), (B) und/oder wenigstens einer Klarlackzusammensetzung erzielt wird. Als Retuschierfarben eingesetzte Decklackzusammensetzungen (A1) werden hergestellt, indem wenigstens eine Komponente (a-I) mit wenigstens einer Komponente (c), gegebenenfalls wenigstens einer Komponente (d) und gegebenenfalls der Komponente (e) gemischt wird. Als Kantenfarbe eingesetzte Decklackzusammensetzungen (A2) werden hergestellt, indem wenigstens eine Komponente (a-II) mit wenigstens einer Komponente (c), gegebenenfalls wenigstens einer Komponente (d) und gegebenenfalls der Komponente (e) gemischt wird. Das Mischsystem umfasst zudem wenigstens eine Komponente (b), welche ein Gesamtgewicht im Bereich von 0,5 bis 1 kg wie beispielsweise von 0,5 kg aufweist. Spachtel (B) werden hergestellt, indem eine Komponente (b), die Teil des erfindungsgemäßen Mischsystems ist, unter den Mischkopf der Mischvorrichtung gestellt wird und zu dieser mittels der Mischvorrichtung wenigstens eine Komponente (c) und gegebenenfalls wenigstens eine Komponente (d) und gegebenenfalls wenigstens eine Komponente (e) volumetrisch automatisch zudosiert werden. Umfasst das Mischsystem beispielsweise jeweils wenigstens eine Komponente (b) mit jeweils einem Gesamtgewicht von 0,5 kg, so ist die in der Mischvorrichtung enthaltene Dosieranlagensteuerungssoftware zur automatisierten Herstellung von (B) entsprechend auf diese Menge von (b) ausgelegt.

Im Folgenden werden beispielhafte exemplarische Zusammensetzungen der Komponenten (a) bis (e) individualisiert:

### Komponenten (a)

### Komponente (a-I)

| *Bestandteil* | *eingesetztes Produkt* |
|---|---|
| Bindemittel (a1) | Vinnol® E 15/48 A |
| Organisches Lösemittel (a2) | Butylacetat |

Komponente (a-I) weist einen durch das in (a1) vorhandene polymere Harz hervorgerufenen Festkörperanteil von 12 Gew.-%, bezogen auf das Gesamtgewicht von (a) auf.

### Komponente (a-II)

| *Bestandteil* | *eingesetztes Produkt* |
|---|---|
| Bindemittel (a1) | Vinnol® E 15/48 A |
| Organisches Lösemittel (a2) | Methoxypropylacetat |
| Mattierungsmittel (a3) | Syloid® ED30 |

Komponente (a-II) weist einen durch das in (a1) vorhandene polymere Harz und durch das Mattierungsmittel (a3) hervorgerufenen Festkörperanteil von 16 Gew.-%, bezogen auf das Gesamtgewicht von (a) auf.

Vinnol® E 15/48 A ist ein funktionelle Hydroxyl-Gruppen aufweisendes polymeres Harz, welches ein Copolymer aus Vinylchlorid einem Acrylsäureester. Der Anteil an umgesetztem Vinylchlorid innerhalb des Copolymeren liegt bei ca. 84 Gew.-% und der Anteil an umgesetzten Acrylsäureester bei ca. 16 Gew.-%, jeweils bezogen auf das Gesamtgewicht des Copolymeren.

### Komponenten (b)

### Beispiel 1 b

| *Bestandteil* | *eingesetztes Produkt* |
|---|---|
| Bindemittel (b1) | Ludopal® 150 |
| Organisches Lösemittel (b2) | Styrol |
| Füllstoff (b3) | Bariumsulfat |

Beispiel 1 b enthält 25 Gew.-% (b3), 65 Gew.-% (b1) und 10 Gew.-% Styrol (b2).

### Beispiel 2b

| *Bestandteil* | *eingesetztes Produkt* |
|---|---|
| Bindemittel (b1) | Roskydal® K 65 |
| Organisches Lösemittel (b2) | Styrol |
| Füllstoff (b3) | Talkum |

Beispiel 2b enthält 20 Gew.-% (b3), 65 Gew.-% (b1) und 15 Gew.-% Styrol (b2).

### Beispiel 3b

| *Bestandteil* | *eingesetztes Produkt* |
|---|---|
| Bindemittel (b1) | Synolite® 6494 U3 |
| Organisches Lösemittel (b2) | Styrol |
| Füllstoff (b3) | Calciumcarbonat |

Beispiel 1 b enthält 15 Gew.-% (b3), 70 Gew.-% (b1) und 15 Gew.-% Styrol (b2).

Roskydal® K65, Ludopal® 150 und Synolite® 6494 U3 sind ungesättigte kommerziell erhältliche Polyester.

### Komponenten (c)

### Beispiel 1 c

| *Bestandteil* | *eingesetztes Produkt* |
|---|---|
| Bindemittel (c1) | Laropal® A81 |
| Organisches Lösemittel (c2) | Ethanol |
| Pigment (c3) | Titandioxid |

Beispiel 1 c enthält 15 Gew.-% (c3), 20 Gew.-% (c1) und 75 Gew.-% (c2).

### Beispiel 2c

| *Bestandteil* | *eingesetztes Produkt* |
|---|---|
| Bindemittel (c1) | Laropal® A81 |
| Organisches Lösemittel (c2) | Ethylacetat |
| Pigment (c3) | Bayferrox® 3920 |

Beispiel 2c enthält 20 Gew.-% (c3), 15 Gew.-% (c1) und 75 Gew.-% (c2).

### Beispiel 2c

| *Bestandteil* | *eingesetztes Produkt* |
|---|---|
| Bindemittel (c1) | Laropal® A81 |
| Organisches Lösemittel (c2) | Butylacetat |
| Pigment (c3) | Irgazin®-Gelb |

Beispiel 2c enthält 20 Gew.-% (c3), 15 Gew.-% (c1) und 75 Gew.-% (c2).

Laropal® A81 ist ein polymeres Kondensationsprodukt aus Harnstoff und wenigstens einem Aldehyden.

### Komponenten (d)

### Beispiel 1d

| *Bestandteil* | *eingesetztes Produkt* |
|---|---|
| Organisches Lösemittel (d1) | Glykolether |
| Farbstoff (d2) | Orasol®-Gelb |

Beispiel 1d enthält 98 Gew.-% (d1) und 2 Gew.-% (d2).

### Beispiel 2d

| *Bestandteil* | *eingesetztes Produkt* |
|---|---|
| Organisches Lösemittel (d1) | Butylacetat |
| Farbstoff (d2) | Orasol®-Rot |

Beispiel 1d enthält 99 Gew.-% (d1) und 1 Gew.-% (d2).

### Komponente (e)

### Beispiel 1 e

| *Bestandteil* | *eingesetztes Produkt* |
|---|---|
| Organisches Lösemittel | Ethylacetat |
| Additiv | Aersosil® 200 |

Beispiel 1e enthält 97 Gew.-% organisches Lösemittel und 3 Gew.-% Additiv.

### Beispiel 2e

| *Bestandteil* | *eingesetztes Produkt* |
|---|---|
| Organisches Lösemittel | Butylacetat |
| Additiv | Byk 410 |

Beispiel 1 e enthält 98 Gew.-% organisches Lösemittel und 2 Gew.-% Additiv.

### Decklackzusammensetzungen

Als Retuschierfarbe einsetzbare Decklackzusammensetzungen sind erhältlich durch Mischen der Komponente (a-I) mit wenigstens einer Komponente (c), gegebenenfalls wenigstens einer Komponente (d) und gegebenenfalls der Komponente (e).

Als Kantenfarbe einsetzbare Decklackzusammensetzungen sind erhältlich durch Mischen der Komponente (a-II) mit wenigstens einer Komponente (c), gegebenenfalls wenigstens einer Komponente (d) und gegebenenfalls der Komponente (e).

### Spachtel

Als Spachtel einsetzbare Beschichtungszusammensetzungen sind erhältlich durch Mischen einer der Komponenten (b) mit wenigstens einer Komponente (c), gegebenenfalls wenigstens einer Komponente (d) und gegebenenfalls der Komponente (e).

### Klarlackzusammensetzungen

Farbige Klarlackzusammensetzungen sind erhältlich durch Mischen einer der Komponenten (a-I) mit wenigstens einer Komponente (d) und gegebenenfalls der Komponente (e).

Die Reihenfolge der Mischung der einzelnen Komponenten mittels der Dosieranlage ist dabei jeweils beliebig: beispielsweise kann zunächst wenigstens eine Komponente (c) mit wenigstens einer Komponente (d) vermischt werden und die resultierende Mischung dann einer zuvor dosierten Menge einer Komponente (a-I), (a-II) oder (b) zugegeben werden. Vor Herstellung der resultierenden Mischung können gegebenenfalls zunächst weitere Komponenten (c), (d) und/oder (e) zugemischt werden. Alternativ kann aber auch direkt die jeweilige gewünschte bindemittelhaltige Beschichtungszusammensetzung enthaltend wenigstens eine der Komponenten (a-I), (a-II) oder (b) hergestellt werden.

## Patentansprüche

1. Ein Mischsystem zur Herstellung von Decklackzusammensetzungen und Spachteln enthaltend wenigstens die folgenden Komponenten (a) bis (d) sowie gegebenenfalls (e), nämlich
(a) wenigstens eine pigmentfreie Basiszusammensetzung zur Herstellung wenigstens einer Decklackzusammensetzung (A), wobei (a)
wenigstens ein Bindemittel (a1) und wenigstens ein organisches Lösemittel (a2) und gegebenenfalls wenigstens ein Mattierungsmittel (a3) umfasst,
(b) wenigstens eine von (a) verschiedene Basiszusammensetzung zur Herstellung wenigstens einer als Spachtel eingesetzten Beschichtungszusammensetzung (B), wobei (b)
wenigstens ein Bindemittel (b1), wenigstens ein organisches Lösemittel (b2) sowie wenigstens einen Füllstoff (b3) umfasst,
(c) mehrere unterschiedliche Pigmentpasten, welche jeweils unabhängig voneinander
wenigstens ein Bindemittel (c1), wenigstens ein organisches Lösemittel (c2) sowie wenigstens ein Pigment (c3) umfassen,
(d) mehrere unterschiedliche bindemittelfreie Farbstofflösungen, welche jeweils unabhängig voneinander
wenigstens ein organisches Lösemittel (d1) und wenigstens einen Farbstoff (d2) umfassen, und
(e) gegebenenfalls ein oder mehrere unterschiedliche organische Lösemittel, die gegebenenfalls wenigstens ein Additiv und/oder wenigstens ein Vernetzungsmittel enthalten können.

2. Das Mischsystem gemäß Anspruch 1, **dadurch gekennzeichnet, dass** es wenigstens zwei voneinander verschiedene Komponenten (a) enthält, nämlich wenigstens eine Komponente
(a-I) zur Herstellung wenigstens einer Decklackzusammensetzung (A1),
wobei (a-I) wenigstens ein Bindemittel (a1) und wenigstens ein organisches Lösemittel (a2) umfasst,
und wenigstens eine Komponente
(a-II) zur Herstellung wenigstens einer von (A1) verschiedenen Decklackzusammensetzung (A2),
wobei (a-II) wenigstens ein Bindemittel (a1), wenigstens ein organisches Lösemittel (a2) und wenigstens ein Mattierungsmittel (a3) umfasst.

3. Das Mischsystem gemäß Anspruch 1 oder 2, **dadurch gekennzeichnet, dass** das in der wenigstens einen Komponente (a) enthaltene wenigstens eine Bindemittel (a1) wenigstens ein wenigstens funktionelle Hydroxyl-Gruppen und/oder Carboxyl-Gruppen und/oder Epoxid-Gruppen aufweisendes polymeres Harz umfasst.

4. Das Mischsystem gemäß einem der vorstehenden Ansprüche, **dadurch gekennzeichnet, dass** das in der wenigstens einen Komponente (a) enthaltene wenigstens eine Bindemittel (a1) wenigstens ein wenigstens funktionelle Hydroxyl-Gruppen und/oder Carboxyl-Gruppen und/oder Epoxid-Gruppen aufweisendes polymeres Harz umfasst, welches ein Copolymer aus Vinylchlorid und wenigstens einem ethylenisch ungesättigten Monomer ist.

5. Das Mischsystem gemäß einem der vorstehenden Ansprüche, **dadurch gekennzeichnet, dass** das in der wenigstens einen Komponente (b) enthaltene wenigstens eine Bindemittel (b1) wenigstens einen ungesättigten Polyester als polymeres Harz umfasst und das ebenfalls darin enthaltene wenigstens eine organische Lösemittel (b2) ein Reaktivverdünner ist.

6. Das Mischsystem gemäß einem der vorstehenden Ansprüche, **dadurch gekennzeichnet, dass** das in der Komponente (c) enthaltene wenigstens eine Bindemittel (c1) wenigstens ein polymeres Kondensationsprodukt aus Harnstoff und/oder Formaldehyd und wenigstens einem Aldehyden und/oder wenigstens einem Keton als polymeres Harz umfasst.

7. Das Mischsystem gemäß einem der vorstehenden Ansprüche, **dadurch gekennzeichnet, dass** das in der Komponente (c) enthaltene wenigstens eine Pigment (c3) ausgewählt ist aus der Gruppe bestehend aus anorganischen und organischen farbgebenden Pigmenten, Effektpigmenten sowie Mischungen davon.

8. Das Mischsystem gemäß einem der vorstehenden Ansprüche, **dadurch gekennzeichnet, dass** der in der Komponente (d) enthaltene wenigstens eine Farbstoff (d2) ausgewählt ist aus der Gruppe bestehend aus basischen Farbstoffen, fettlöslichen Farbstoffen und Metallkomplexfarbstoffen sowie Mischungen davon.

9. Eine Verwendung des Mischsystems gemäß einem der Ansprüche 1 bis 8 zur Herstellung von Decklackzusammensetzungen und Spachteln sowie gegebenenfalls Klarlackzusammensetzungen.

10. Ein Verfahren zur Herstellung von Decklackzusammensetzungen und/oder Spachteln und/oder Klarlackzusammensetzungen, **dadurch gekennzeichnet, dass** hierfür das Mischsystem gemäß einem der Ansprüche 1 bis 8 eingesetzt wird.

11. Das Verfahren gemäß Anspruch 10 zur Herstellung von wenigstens einer Decklackzusammensetzung (A1) und/oder wenigstens einer weiteren von (A1) verschiedenen Decklackzusammensetzung (A2) und wenigstens einer als Spachtel eingesetzten Beschichtungszusammensetzung (B) sowie gegebenenfalls wenigstens einer Klarlackzusammensetzung.

12. Das Verfahren gemäß Anspruch 10 oder 11, **dadurch gekennzeichnet, dass** das Verfahren wenigstens einen der Schritte (1) und (2) und zudem den Schritt (3) umfasst, nämlich
(1) Mischen wenigstens einer Komponente (a) mit wenigstens einer Pigmentpaste (c) und gegebenenfalls mit wenigstens einer Farbstofflösung (d) und gegebenenfalls mit wenigstens einer Komponente (e) zur Herstellung wenigstens einer Decklackzusammensetzung (A1), und/oder
(2) Mischen wenigstens einer Komponente (a) mit wenigstens einer Pigmentpaste (c) und gegebenenfalls mit wenigstens einer Farbstofflösung (d) und gegebenenfalls mit wenigstens einer Komponente (e) zur Herstellung wenigstens einer Decklackzusammensetzung (A2),
wobei Komponente (a) im Fall von Schritt (2) neben dem wenigstens einen Bindemittel (a1) und dem wenigstens einen organisches Lösemittel (a2) wenigstens ein Mattierungsmittel (a3) umfasst, und
(3) Mischen wenigstens einer Komponente (b) mit wenigstens einer Pigmentpaste (c) und gegebenenfalls mit wenigstens einer Farbstofflösung (d) und gegebenenfalls mit wenigstens einer Komponente (e) zur Herstellung wenigstens einer als Spachtel eingesetzten Beschichtungszusammensetzung (B).

13. Eine Verwendung der nach dem Verfahren gemäß einem der Ansprüche 10 bis 12 erhältlichen Decklackzusammensetzungen (A1) und/oder (A2) und der als Spachtel eingesetzten Beschichtungszusammensetzung (B) zum Ausbessern von Fehlstellen auf oder in Holz.

14. Die Verwendung gemäß Anspruch 13, **dadurch gekennzeichnet, dass** die Decklackzusammensetzung (A1) als Retuschierfarbe, die Decklackzusammensetzung (A2) als Kantenfarbe und die Beschichtungszusammensetzung (B) als Spachtel eingesetzt wird.

15. Ein Verfahren zur Einstellung und/oder Abstimmung von Farbtönen wenigstens einer Decklackzusammensetzung (A1) und/oder wenigstens einer weiteren von (A1) verschiedenen Decklackzusammensetzung (A2) und wenigstens einer als Spachtel eingesetzten Beschichtungszusammensetzung (B), **dadurch gekennzeichnet, dass** hierfür das Mischsystem gemäß einem der Ansprüche 1 bis 8 eingesetzt wird.
